# EUROPÄISCHE PATENTSCHRIFT

(11) **EP 4 461 859 B1**
(45) Veröffentlichungstag und Bekanntmachung des Hinweises auf die Patenterteilung: **03.12.2025**
(21) Anmeldenummer: 24159192.4
(22) Anmeldetag: 22.02.2024
(51) Int. Cl.: D04H 1/4374, B32B 5/02, B32B 5/06, B32B 5/26, D04H 1/492, D04H 1/498, D04H 18/04

(54) **ANLAGE UND VERFAHREN ZUR VERBINDUNG BZW. VERFESTIGUNG EINER BAHN VON FASERSTOFF MIT EINEM VLIES**
INSTALLATION AND METHOD FOR CONNECTION BONDING OF A WEB OF FIBROUS MATERIAL TO A NONWOVEN
INSTALLATION ET PROCÉDÉ DE LIAISON CONSOLIDATION D'UNE BANDE DE MATIÈRE FIBREUSE AVEC UN NON-TISSÉ

(30) Priorität: 10.05.2023 DE 102023112259
(43) Veröffentlichungstag der Anmeldung: 13.11.2024
(73) Patentinhaber: Trützschler Group SE, 41199 Mönchengladbach (DE)
(72) Erfinder: Schütt, Philipp, 63517 Rodenbach (DE); Weigert, Thomas, 65843 Sulzbach (DE)

(56) Entgegenhaltungen:
- WO-A1-2016/173685
- DE-A1- 102005 033 070
- DE-A1- 102015 112 955
- DE-A1- 102021 107 902

## Beschreibung

Die Erfindung betrifft eine Anlage und ein Verfahren zum Verfestigen eines Vlieses, das zumindest eine Lage unverfestigtes Vlies und/oder eine Schicht von losen Fasern umfasst, nach dem Oberbegriff der unabhängigen Ansprüche.

Nach dem Stand der Technik werden die losen Fasern auf einem Vlies abgelegt und auf zwei übereinander angeordneten Trommeln mittels Wasserstrahlen miteinander vernadelt. Eine bekannte Anlage weist eine horizontale Bandführung für die losen Fasern mit dem Vlies zu einer ersten Vernadelungstrommel auf. Dieser Vernadelungstrommel sind zwei Wasserbalken zugeordnet, die die Unterseite der Vlies/Faser-Kombination verfestigen. Eine nachfolgende Umlenkwalze sorgt dafür, dass die Vlies/Faser-Kombination auf der vertikal über der ersten Vernadelungstrommel angeordneten zweiten Vernadelungstrommel ebenfalls mittels Wasserbalken von der Unterseite aus verfestigt wird. Nachfolgend sind fünf Umlenkwalzen nach der zweiten Verfestigungstrommel angeordnet, mittels denen das verfestigte Vlies wieder auf ein horizontales Band zur weiteren Verarbeitung umgelenkt werden. Die fünf Umlenkwalzen nach der zweiten Trommel führen zu erhöhten Verzügen. Des Weiteren lassen sich auf der unteren Trommel nur drei Wasserbalken unterbringen aufgrund der horizontalen Lage des Bandes. Für höhere Geschwindigkeiten sind aber sieben Wasserbalken auf Trommeln notwendig. Dies erhöht die Komplexität zusätzlich, da eine dritte Trommel ergänzt werden muss. Weitere Nachteile sind erhöhte Verzüge, eine aufwändige Konstruktion bei höheren Geschwindigkeiten, ein komplexer Einfädelprozess aufgrund der Vielzahl an Umlenkungen und ein erhöhter Raumbedarf in der Gesamtanlagenlänge.

In der DE 102005033070 A1 wird eine Faserbahn auf einem umlaufenden Band mit einer Verdichtungswalze beaufschlagt, die im Innenraum eine Wasserstrahlverfestigung aufweist. Hiermit soll das MD/CD-Verhältnis beeinflusst werden.

Die DE 102015112955 A1 offenbart die Übergabe einer nassgelegten Faserstoffbahn von einem ersten umlaufenden Band mit der Oberseite auf ein weiteres umlaufendes Band unter Vermeidung eines Verzuges zwischen den beiden Bändern.

In der WO 2016/173685 wird eine Faserbahn zwischen zwei umlaufenden Bändern verfestigt und strukturiert, wobei ein umlaufendes Band eine Microperforierung aufweist. Nach den umlaufenden Bändern erfolgt eine Übergabe der verfestigten und strukturierten Faserbahn auf zwei Trommeln.

Die DE 102021107902 A1 offenbart eine Anlage, bei eine Lage nassgelegte Fasern mit der Oberseite auf ein Krempelvlies übergeben wird, und beide Lagen nachfolgend miteinander verfestigt werden. Dabei sind nach einem umlaufenden Band zwei Trommeln angeordnet, die das Vlies erst von der Unterseite, dann von der Oberseite verfestigen.

Aufgabe der vorliegenden Erfindung ist es, ein Verfahren und eine Anlage zur Verbindung einer Bahn von losen Fasern mit einem Vlies zu schaffen, mit der eine kompakte und preiswerte Anlage herstellbar ist, und das entstehende Vlies eine hohe Festigkeit aufweist. Dabei soll die Anlage eine hohe Produktivität aufweisen.

Die Erfindung wird durch eine Anlage zum Verfestigen eines Vlieses gelöst, bei dem das verfestigte Vlies zumindest eine Lage unverfestigtes Vlies und/oder eine Schicht von losen Fasern umfasst. Die Anlage weist zumindest einen Transporttisch auf, der ausgebildet ist, das unverfestigte Vlies und/oder die Schicht von losen Fasern zu transportieren. Der Transporttisch weist ein umlaufendes Band mit einem ersten horizontalen Abschnitt auf, dem in Materialtransportrichtung ein zweiter schräg abfallender Abschnitt folgt. Dem Transporttisch folgt in Materialtransportrichtung eine erste Trommel mit mindestens zwei Wasserbalken, und einer oberhalb der ersten Trommel angeordneten zweiten Trommel mit mindestens zwei Wasserbalken. Die Erfindung ist dadurch gekennzeichnet, dass die erste Trommel zur Aufnahme des Vlieses oder der Schicht von losen Fasen mit dem schräg abfallenden Abschnitt des Transporttisches derart zusammenwirkt, dass die Oberseite des unverfestigten Vlieses oder die Oberseite der Schicht von losen Fasern an der Oberfläche der Trommel anliegt.

Die Erfindung wird auch durch ein Verfahren zum Verfestigen eines Vlieses gelöst, das zumindest eine Lage unverfestigtes Vlies und/oder eine Schicht von losen Fasern umfasst, wobei das unverfestigte Vlies und/oder die Schicht von losen Fasern mittels eines Transporttisches zu einer ersten Trommel transportiert wird. Dabei wird die Oberseite des unverfestigten Vlieses oder die Oberseite der Schicht von losen Fasern von einem schräg abfallenden Abschnitt des Transporttisches auf die Oberfläche der ersten Trommel übergeben, wobei eine Verfestigung auf der ersten Trommel durch mindestens zwei Wasserbalken von der Unterseite des Vlieses oder der Schicht von losen Fasern erfolgt, und eine weitere Verfestigung auf einer zweiten Trommel mit Wasserbalken erfolgt, die oberhalb der ersten Trommel angeordnet ist.

Als Unterseite wird die Seite des unverfestigten Vlieses oder der Schicht von losen Fasern definiert, die auf dem Transporttisch aufliegt. Die Oberseite ist demnach die dem Band des Transporttisches abgewandte Seite des unverfestigten Vlieses oder der Schicht von losen Fasern.

Vorteilhafte Weiterbildungen der Erfindung sind durch die Unteransprüche des Anlagen- und Vorrichtungsanspruches definiert.

Allen Ausführungsformen gemeinsam ermöglicht der schräg abfallende Abschnitt des Transporttisches die Anordnung der ersten Trommel mit ihrem Drehpunkt unterhalb der Ebene des horizontalen Abschnittes. Dadurch wird ein Freiraum geschaffen für weitere Wasserbalken, die unterhalb der Drehachse der ersten Trommel angeordnet werden können. In Folge ist auch der notwendige Freiraum vorhanden, auf der zweiten Trommel die Wasserbalken in dieser Darstellung rechts der gemeinsamen Mittelachse der Trommeln anzuordnen, also seitlich der Mittelachse in Materialflussrichtung. Damit ist der Vorteil verbunden, dass bereits auf der ersten Trommel eine höhere Verfestigung der Faser/Vlieskomposition erreicht wird, so dass die Anlage mit einer höheren Geschwindigkeit betrieben werden kann, beispielsweise mit 300m/min. Der weitere Vorteil liegt in der veränderten Anordnung der Wasserbalken auf der zweiten Trommel seitlich der Mittelachse in Materialflussrichtung, wodurch mit maximal zwei Umlenkwalzen das verfestigte Vlies an eine nachfolgende Verarbeitungsstation übergeben werden kann, deren Aufnahmepunkt beispielsweise mittels des umlaufenden Bandes unterhalb des letzten Berührpunktes der Verfestigungsstation liegt. Damit kann ein unkontrollierter Verzug auf das schon verfestigte Vlies deutlich reduziert werden. Dabei wird die bereits glatte Unterseite des zu verfestigen Vlieses durch die Wasserstrahlen beaufschlagt und die bei einem nassen oder trockenen Faserauflauf unregelmäßige Oberseite durch die Oberfläche der Trommeln geglättet. Bei einer Faser/Vlieskomposition, die aus einem unverfestigten Vlies und einem Faserstoff besteht, werden die losen Fasern in das unverfestigte Vlies gedrückt. Die Ausschwemmung der kurzen Fasern wird dabei reduziert und gleichzeitig die Festigkeit dieses zweilagigen verfestigten Vlieses erhöht. Bei einer Wasserstrahlverfestigung auf einem Band wird der anlagentechnische Aufwand für das gleiche Ergebnis größer und die Anlage vergrößert sich in der Baulänge.

Eine weitere Verbesserung kann durch die Ausführung der Umlenk- und Führungswalzen als angetriebene Walzen erfolgen, wodurch der Verzug auf das verfestigte Vlies deutlich reduziert wird und sich zumindest die Oberflächenstruktur nicht ändert. Die jeweilige Umfangsgeschwindigkeit der Walzen entspricht dann immer der Transportgeschwindigkeit des verfestigten Vlieses. Ebenfalls sind die Trommeln als angetriebene Trommeln ausgebildet.

Dadurch, dass die Trommeln aufgrund der veränderten Anordnung der Wasserbalken weiter auseinander positioniert werden, können beide Trommeln mit Reinigungsvorrichtungen ausgestattet werden, was die Standzeit der Anlage erhöht. Die Neugestaltung der Anordnung der Wasserbalken auf den Trommeln sowie die optimierte Platzierung und verminderte Anzahl der Umlenkwalzen führt zu signifikanten Verbesserungen. Die erste Trommel wurde auf eine Schräge am Zuführband gesetzt, um mehr Platz für Wasserbalken zu schaffen.

Zur Optimierung der Warenführung wurde die Anordnung der Komponenten (Wasserbalken, Trommeln und Umlenkwalzen) dahingehend optimiert, dass mit nur zwei Umlenkwalzen nach der zweiten Trommel die Warenbahn an beispielsweise ein Absaugband oder eine weitere Arbeitsstation übergeben werden kann. Dies führt zu geringeren Verzügen als bei der Variante, die mit mehr Umlenkwalzen ausgestattet war. Des Weiteren ist durch die Positionierung der ersten Trommel an einem schrägen Zuführband die Ergänzung eines vierten Wasserbalkens auf dieser Trommel möglich, so dass mittels sieben Wasserbalken auf zwei Trommeln Transportgeschwindigkeiten des Vlieses bis 300 m/min erreicht werden können.

Die Anlage ermöglicht die Verfestigung eines Vlieses, das zumindest eine Lage unverfestigtes Vlies und eine Schicht von losen Fasern umfasst. Die Anlage ermöglicht aber auch die Verfestigung eines Vlieses, das nur aus einer Lage unverfestigtes Vlies, beispielsweise ein Krempelvlies, oder nur aus einer Schicht von losen Fasern besteht. Alternativ kann durch die Anordnung einer Abwickelstation, mit dem ein verfestigtes Vlies in die Anlage eingeführt wird, ein dreilagiges Vlies hergestellt werden. Dabei wird vorzugsweise die Schicht von losen Fasern zwischen den beiden Lagen unverfestigtes und verfestigtes Vlies gekammert.

Weitere, die Erfindung verbessernde Maßnahmen werden nachstehend gemeinsam mit der Beschreibung durch mehrere Ausführungsbeispiele der Erfindung anhand der Figuren näher dargestellt.

Es zeigt:
Figur 1: Ein erstes Layout der erfindungsgemäßen Anlage mit fünf Wasserbalken
Figur 2: Ein zweites Layout der erfindungsgemäßen Anlage mit sieben Wasserbalken
Figur 3: Das zweite Layout mit einer alternativen Fahrweise der Faserbahn.

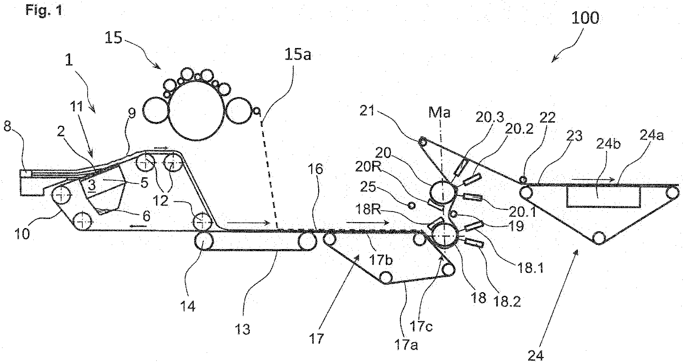

Figur 1 zeigt die Anlage 100 mit einer Geschwindigkeit des verbundenen Vlieses bis 250 m/min mit optimierter Warenführung nach der zweiten Trommel und insgesamt fünf Wasserbalken.

Im Gegensatz zum Stand der Technik wird das Vlies auf die Bahn aus losen Fasern gelegt und dann mit der Unterseite auf den Trommeln 18, 20 vernadelt. Dabei werden die losen Fasern in das Vlies eingedrückt, was eine höhere Festigkeit bewirkt, aber auch den Verlust an losen Fasern reduziert. Die Verfestigung bzw. Verbindung der losen Fasern mit dem Vlies erfolgt nur auf Trommeln 18, 20, nicht auf einem umlaufenden Band, wodurch ebenfalls eine höhere Festigkeit der losen Fasern mit dem Vlies möglich ist und gleichzeitig die Anlage 100 kürzer gebaut werden kann.

Die Vergrößerung des Abstandes der Trommeln 18, 20 zueinander ermöglicht den Einbau von Reinigungskomponenten, beispielsweise Absaugvorrichtungen und/oder Reinigungsbürsten, zwischen den Trommeln 18, 20, so dass die Standzeit der Anlage 100 zwischen den Reinigungsintervallen erhöht wird.

Das in den Figuren 1 bis 3 dargestellte Krempelvlies kann als ein unverfestigtes Vlies aus einer Krempel 15 ausgebildet sein, oder als verfestigtes Vlies aus einer Krempel 15 mit nachgeordneter nicht dargestellter Verfestigung oder aus einer Abwickelstation in die Anlage 100 eingeleitet werden.

Ein Schrägsiebformer 1 ist oberhalb eines umlaufenden Siebbandes 10 angeordnet. Der Schrägsiebformer 1 steht beispielhaft für eine Vorrichtung zum Ablegen von losen Fasern, die auch als Meltblownanlage, Sekundärstoffauflauf, etc. ausgebildet sein kann. Das Siebband 10, das als endloses Band ausgeführt sein kann, läuft um verschiedene Walzen 12 herum und weist einen schrägen Abschnitt 11 auf, der in Laufrichtung des Siebbandes um einen Winkel ansteigt. Im Bereich des schrägen Abschnittes 11 ist oberhalb des Siebbandes 10 der Schrägsiebformer 1 angeordnet, auf dessen Belag 2 sich das Siebband 10 abstützt. Unterhalb des Belages 2 ist mindestens eine Saugzone 3 angeordnet, die mittels nicht dargestellter Pumpen unter Unterdruck gesetzt wird. Der Schrägsiebformer 1 kann mehrere Saugzonen 3 aufweisen, die mit unterschiedlichen Drücken bzw. Unterdrücken beaufschlagt, werden. Die Unterdruckquellen können vorzugsweise als steuer-/regelbare Vakuumpumpen ausgeführt werden.

Über einen Stoffauflauf 8 können eine oder mehrere übereinander angeordnete Fasersuspensionen auf das Siebband 10 gegeben werden. Jede Fasersuspension enthält neben Wasser einen bestimmten Gehalt an Feststoff, der wiederum aus Fasern und aus anderen Zuschlagstoffen besteht. Bei mehreren Fasersuspensionen sind zwischen ihnen nicht dargestellte Lamellen angeordnet, mit denen die Schichtdicke der Fasersuspensionen einzeln oder in Summe variiert werden kann.

Die hier verwendeten Fasern können zumindest teilweise aus kurzen synthetischen Fasern mit einer Faserlänge von 8 bis 12 mm wie beispielsweise Polyester, Polyamid, Polypropylen oder Polyolefin bestehen. Auch Fasermischungen aus synthetischen und natürlichen Fasern sind möglich. Ebenso können die äußeren Schichten auch aus 100 % Pulp bestehen. Die mittlere Fasersuspension kann aus natürlichen Fasern bestehen, die ein hohes Wasserrückhaltevermögen aufweisen, und vorzugsweise biologisch abbaubar sind.

Selbstverständlich kann auch nur eine Fasersuspension aufgegeben werden, so dass sich nach dem Abziehen von Wasser eine einzige Lage von Fasern bildet. Diese Fasersuspension kann aus einer Mischung von Fasern mit einem hohen Anteil Pulp und einem kleineren Anteil aus kurzen synthetischen Fasern mit einer Faserlänge von 8 bis 12 mm wie beispielsweise Polyester, Polyamid, Polyolefin, Polypropylen oder Viskose oder Lyocell bestehen. Das Flächengewicht der trockenen Bahn aus Faserstoff 9 kann vorzugsweise 10 bis 60 g/m² betragen (Trockengewicht).

Das Siebband 10, das durchlässig für Flüssigkeiten und Gase ist, transportiert die mindestens eine Fasersuspension über den schrägen Abschnitt 11 über den Schrägsiebformer 1. Aufgrund der Schwerkraft und des Unterdruckes, der auf die mindestens eine Fasersuspension wirkt, wird die Fasersuspensionen entwässert, wodurch sich in diesem Beispiel eine Bahn aus Faserstoff 9 mit mindestens einer Lage Fasern bildet. Unterhalb der Saugzone 3 wird das Siebwasser 6 in einem Siebkasten 5 gesammelt und abgezogen.

Die Bahn aus Faserstoff 9 wird in Pfeilrichtung erst über einen horizontalen Abschnitt dann weiter über einen schräg abfallenden Abschnitt auf dem Band 10 transportiert. Nach dem schräg abfallenden Abschnitt wird die Bahn aus Faserstoff 9 mit seiner Unterseite auf ein weiteres umlaufendes Band 13 übergeben, das als Endlosband um mindestens zwei Walzen 14 läuft.

In Transportrichtung der Bahn aus Faserstoff 9 ist im ersten Ausführungsbeispiel eine Krempel 15 in der Anlage 100 angeordnet. Die Krempel 15 ist räumlich oberhalb des Bandes 13 angeordnet, so dass die Bahn aus Faserstoff 9 unabhängig von der Krempel 15 zu einer Wasserstrahlverfestigung mit mindestens einem Wasserbalken geführt werden kann. Oder anders ausgedrückt, das Band 13 wird unterhalb der ortsfest installierten Krempel 15 geführt und ist ausgebildet, die Bahn aus Faserstoff 9 direkt von der Vorrichtung zur Ablage der losen Fasern - hier der Schrägsiebformer - zur Wasserstrahlverfestigung zu leiten. Dabei wird die Bahn aus Faserstoff 9 verfestigt.

Die Krempel 15 kann eine unverfestigte kardierte Warenbahn aus Fasern, ein Krempelvlies 15a, in die Anlage 100 einführen. Dies erfolgt vor der Wasserstrahlverfestigung, so dass mittels der Wasserbalken eine Verbindung der Bahn aus Faserstoff 9 mit dem Krempelvlies 15a erfolgt. Das Krempelvlies 15a kann beispielsweise aus Polyester, Viskose, einer Baumwollmischung oder einer Mischung aus synthetischen und/oder natürlichen Fasern bestehen. Vorzugsweise beträgt das Flächengewicht des Krempelvlieses 15a 15 bis 60 g/m². Statt der Krempel 15 kann auch eine Abwickelstation ein verfestigtes Vlies auf die Lage Faserstoff 9 aufbringen, was für die weitere Verarbeitung aber den Nachteil hat, dass die Verbindung zwischen dem verfestigten Vlies und dem Faserstoff 9 nicht so gleichmäßig und innig wird wie mit einem unverfestigtem Vlies 15a. Bei dieser Variante müsste der Druck der Wasserbalken in der nachfolgenden Verfestigungsstation deutlich erhöht werden, was die Energiekosten erhöht und auch die Ausschwemmung der nassgelegten Fasern.

Nachfolgend wird die Faser/Vlieskomposition 16 beschrieben, wobei klar ist, dass die Anlage variabel ist und auch nur den Faserstoff 9 oder nur das unverfestigte Krempelvlies 15a verfestigen und verarbeiten kann. Die Faser/Vlieskomposition 16 wird vom umlaufenden Band 13 auf einen Transporttisch 17 mit einem umlaufenden Band 17a übergeben, der in Materialflussrichtung am Anfang erst einen horizontalen Abschnitt 17b aufweist, dem in Materialflussrichtung ein schräg abfallender Abschnitt 17c folgt. Dem schräg abfallenden Abschnitt 17c ist eine erste Trommel 18 zugeordnet, die die Faser/Vlieskomposition 16 mit der Oberseite, also mit dem unverfestigten Krempelvlies 15a übernimmt. Zwischen dem schräg abfallenden Abschnitt 17c des Bandes 17a und der Trommel 18 erfolgt eine erste Kompaktierung, wodurch gleichzeitig eine Übergabe der Faser/Vlieskomposition 16 auf die Trommel 18 erfolgt. Der ersten Trommel 18 sind in diesem Ausführungsbeispiel zwei Wasserbalken 18.1, 18.2 zugeordnet, deren Wasserstrahlen auf die Unterseite der Faser/Vlieskomposition 16 auftreffen. Damit wird der Faserstoff 9 in das unverfestigte Krempelvlies 15a eingedrückt und miteinander verbunden und verfestigt. Vertikal oberhalb der ersten Trommel 18 ist eine zweite Trommel 20 angeordnet, der in diesem Ausführungsbeispiel drei Wasserbalken 20.1, 20.2, 20.3 zugeordnet sind. Beide Trommeln 18, 20 sind als Absaugtrommel ausgebildet, auf die ggfs. auch eine Strukturschale aufgezogen werden kann. Die Abstände zwischen den Trommeln 18, 20 sind größer dimensioniert als im Stand der Technik, um optional eine oder zwei Reinigungsvorrichtungen 18R, 20R zwischen den Trommeln 18, 20 anzuordnen. Jede Reinigungsvorrichtung 18R, 20R kann beispielsweise als Abstreifer mit einer Absaugung oder als Reinigungswalze mit Bürsten ausgebildet sein. Eine Führungswalze 19 zwischen den Trommeln 18, 20 ist ausgebildet, die Anlage bzw. Führung der Faser/Vlieskomposition 16 auf den Trommeln 18, 20 in einem großen Umschlingungswinkel zu gewährleisten, bevor die Faser/Vlieskomposition 16 vom letzten Wasserbalken 18.2 der ersten Trommel 18 in den Wirkungsbereich des ersten Wasserbalkens 20.1 der zweiten Trommel 20 einläuft. Auch auf der zweiten Trommel 20 liegt die Faser/Vlieskomposition 16 mit der Oberseite, also mit dem Krempelvlies 15a auf, so dass auch hier der Faserstoff 9 in das Krempelvlies 15a eingedrückt, verbunden und verfestigt wird.

Eine oberhalb der zweiten Trommel 20 angeordnete Umlenkwalze 21 ermöglicht eine Führung des verfestigten Vlieses 23 mit einem großen Umschlingungswinkel auf der zweiten Trommel 20 und lenkt das verfestigte Vlies 23 um nahezu 180° um, so dass ein Weitertransport zu einer nachfolgenden Verarbeitungsstation, die in diesem Beispiel als Absaugvorrichtung 24 ausgebildet ist, erfolgen kann. In Materialflussrichtung neben der Verfestigungsstation angeordnet ist eine weitere zweite Umlenkwalze 22, mit der das verfestigte Vlies 23 auf ein weiteres horizontales Band 24a der Absaugvorrichtung 24 geführt wird. Durch eine in der Höhe entsprechend angeordnete Absaugvorrichtung 24 kann auf die zweite Umlenkwalze 22 verzichtet werden, was aber konstruktiv aufwändiger und teurer wird. Mittels der Absaugvorrichtung 24 wird über eine integrierte Absaugung 24b das Wasser dem verfestigten Vlies 23 entzogen. Die Absaugung 24b ist unterhalb eines umlaufenden perforierten Bandes 24a angeordnet. In Materialflussrichtung können sich weitere Verarbeitungsstationen wie beispielsweise ein Trockner oder eine Wickelstation anschließen.

Figur 1 zeigt die Anordnung der Reinigungsvorrichtungen 18R, 20R, die gegenüberliegend der Wasserbalken 18.1, 18.2, 20.1 - 20.3 auf dem Umfang der ersten und zweiten Trommel 18, 20 angeordnet sind.

Das in dieser Anlage verfestigte Vlies 23 kann als Faser/Vlieskomposition 16 ausgebildet sein, bei dem auf einem trocken oder nassgelegten Faserstoff 9 ein unverfestigtes Krempelvlies 15a abgelegt und zusammen verfestigt wird. Alternativ kann auch nur das unverfestigte Krempelvlies 15a verfestigt werden.

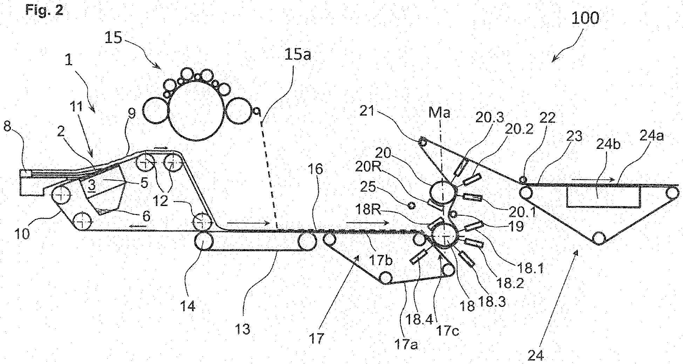

Figur 2 ist identisch zu Figur 1 mit dem kleinen Unterschied, dass der Trommel 18 zwei weitere Wasserbalken 18.3, 18.4 zugeordnet sind. Diese sind unterhalb der Drehachse der Trommel 18 angeordnet, wobei der erste Wasserbalken 18.4 unter dem Band 17a des schräg abfallenden Abschnittes 17c des Transporttisches 17 angeordnet ist. In dieser Position ist der erste Wasserbalken 18.4 auf die Drehachse der ersten Trommel 18 gerichtet, so dass die Faser/Vlieskomposition 16 nicht nur zwischen dem Band 17a und der Trommel 18 kompaktiert wird, sondern auch gegen die Trommel 18 gedrückt wird und sich damit vom Band 17a ablöst. Der innerhalb des Bandes 17a angeordnete Wasserbalken 18.4 wird vorzugsweise mit einem Druckbereich von 10-50bar betrieben. Die Verfestigung der Faser/Vlieskomposition 16 erfolgt deutlich schneller, so dass die Transportgeschwindigkeit des Vlieses in der Anlage bis auf 300m/min vergrößert werden kann. Alle anderen Wasserbalken 18.1, 18.2, 18.3, 20.1, 20.2, 20.3 werden vorzugsweise mit einem Druck von 40-150bar betrieben. In diesem Ausführungsbeispiel sind ebenfalls beiden Trommeln 18, 20 jeweils eine Reinigungsvorrichtung 18R, 20R zugeordnet, die durch eine Vergrößerung des Trommelabstandes von bisher 30mm auf mindestens 700 mm eingebaut werden kann.

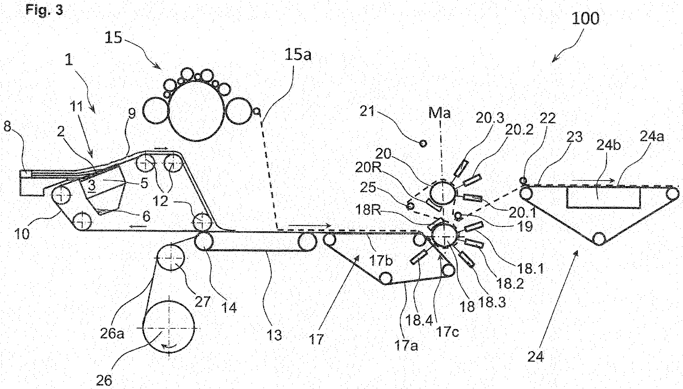

Eine alternative Fahrweise zeigt Figur 3 für die Verfestigung eines Vlieses durch die Verwendung einer weiteren Führungswalze 25. Diese kann zwischen den Trommeln 18, 20 entgegen der Materialflussrichtung angeordnet sein. Damit kann eine beidseitige Verfestigung des Vlieses erfolgen, wobei auf der ersten Trommel 18 wie bisher die Wasserbalken 18.1 - 18.4 auf der Unterseite des Vlieses einwirken. Durch die Führungswalze 25 wird das Vlies entgegen der Materialflussrichtung auf die obere Trommel 20 geführt, so dass jetzt die Oberseite des Vlieses 23 verfestigt wird. Eine Weiterleitung des Vlieses 23 erfolgt dann durch die Umlenkung der Führungswalze 19 auf die Absaugvorrichtung 24. Diese Variante der Warenbahnführung ist beispielsweise vorteilhaft für ein unverfestigtes Kardenvlies 15a, dass ohne die Schicht von losen Fasern verfestigt werden soll. Die Fahrweise kann aber auch vorteilhaft sein, wenn die Faser/Vlieskomposition 16 von beiden Seiten strukturiert werden soll. Hierzu sind die Trommeln 18, 20 ggfs. mit einer Strukturschale auszustatten. Alternativ kann das unverfestigte Krempelvlies 15a oder die Lage Faserstoff 9 alleine in der Anlage verfestigt werden. Als weitere Alternative kann dem umlaufenden Band 13 auch eine Abwickelstation 26 vorgelagert sein, dass ein verfestigtes Vlies 26a mittels einer Umlenkwalze 27 auf das erste Band 13 unter den Faserstoff 9 in die Anlage einführt. Es kann damit ein dreilagiges Vlies mit dem Faserstoff 9 in der mittleren Lage oder ein zweilagiges Vlies mit dem Faserstoff 9 in der oberen Lage verarbeitet werden. Dieses kann dann sowohl in der Fahrweise der Figuren 1 und 2 mit der einseitigen Verfestigung verarbeitet werden, oder alternativ in der Fahrweise der Figur 3, also mit beidseitiger Verfestigung verarbeitet werden.

Allen Ausführungsformen gemeinsam ermöglicht der schräg abfallenden Abschnitt 17c des Transporttisches 17 eine vertiefte Anordnung der ersten Trommel 18. Dadurch wird ein Freiraum geschaffen für weitere Wasserbalken 18.3, 18.4 (Figur 2 und 3), die unterhalb der Drehachse der ersten Trommel 18 angeordnet werden. In Folge ist auch der notwendige Freiraum vorhanden, auf der zweiten Trommel 20 die Wasserbalken 20.1 - 20.3 in dieser Darstellung rechts der gemeinsamen Mittelachse Ma der Trommeln 18, 20 anzuordnen, also seitlich der Mittelachse Ma in Materialflussrichtung. Damit ist der Vorteil verbunden, dass bereits auf der ersten Trommel 18 eine höhere Verfestigung der Faser/Vlieskomposition 16 erreicht wird, so dass die Anlage 100 mit einer höheren Geschwindigkeit betrieben werden kann, beispielsweise mit 300m/min. Vorteilhafterweise kann der Drehpunkt der ersten Trommel unterhalb der Ebene des horizontalen Abschnittes 17b des Transporttisches liegen. Damit kann der vierte Wasserbalken 18.4 so innerhalb des Bandes 17a angeordnet sein, dass eine Kompaktierung zwischen dem Band 17a am schräg abfallenden Abschnitt 17c und der Trommel 18 erfolgt, wobei gleichzeitig die Übergabe vom Band 17a auf die erste Trommel 18 verbessert wird. Der weitere Vorteil liegt in der veränderten Anordnung der Wasserbalken 20.1 - 20.3 auf der zweiten Trommel 20 seitlich der Mittelachse Ma in Materialflussrichtung, wodurch mit nur zwei Umlenkwalzen 21, 22 das verfestigte Vlies 23 an eine nachfolgende Verarbeitungsstation übergeben werden kann, deren Aufnahmepunkt beispielsweise mittels einem umlaufenden Band 24a unterhalb des letzten Berührpunktes der Verfestigungsstation liegt. Damit kann ein unkontrollierter Verzug auf das schon verfestigte Vlies 23 deutlich reduziert werden. Bei einer Wasserstrahlverfestigung auf einem Band wird der anlagentechnische Aufwand für das gleiche Ergebnis größer und die Anlage vergrößert sich in der Baulänge. Bei einer Faser/Vlieskomposition werden die losen Fasern in das unverfestigte Vlies eingedrückt, wodurch die Ausschwemmung an losen Fasern reduziert wird. Vorteilhafterweise kann die Ausführung der Umlenk- 21, 22 und Führungswalzen 19, 25 als angetriebene Walzen erfolgen, wodurch der Verzug auf das verfestigte Vlies 23 reduziert wird und sich zumindest die Oberflächenstruktur nicht ändert.

Die jeweilige Umfangsgeschwindigkeit der Walzen entspricht dann immer der Transportgeschwindigkeit des verfestigten Vlieses 23. Ebenfalls sind die Trommeln 18, 20 als angetriebene Trommeln ausgebildet.

Statt dem in Figur 1 ausführlich beschriebenen Schrägsiebformer kann jede andere Nonwovensmaschine verwendet werden, mit der lose Fasern zu einem Faserstoff auf einem umlaufenden Band abgelegt werden, beispielsweise eine Meltblownanlage, ein Sekundär-Stoffauflauf, ein Rundsiebformer oder eine Airlaidanlage.

### Bezugszeichen

- 100: Anlage

- 1: Schrägsiebformer
- 2: Belag
- 3: Saugzone
- 5: Siebkasten
- 6: Siebwasser
- 8: Stoffauflauf
- 9: Faserstoff
- 10: Siebband
- 11: schräger Abschnitt
- 12: Walze
- 13: Band
- 14: Walze
- 15: Krempel
- 15a: Krempelvlies
- 16: Faser/Vlieskomposition
- 17: Transporttisch
- 17a: Band
- 17b: horizontaler Abschnitt
- 17c: schräg abfallender Abschnitt
- 18: erste Trommel
- 18.1 - 18.4: Wasserbalken
- 18R: Reinigungsvorrichtung
- 19: Führungswalze
- 20: zweite Trommel
- 20.1 - 20.3: Wasserbalken
- 20R: Reinigungsvorrichtung
- 21: Umlenkwalze
- 22: Umlenkwalze
- 23: verfestigtes Vlies
- 24: Absaugvorrichtung
- 24a: umlaufendes Band
- 24b: Absaugung
- 25: Führungswalze
- 26: Abwickelstation
- 26a: verfestigtes Vlies
- 27: Umlenkwalze

- Ma: Mittelachse Trommeln

## Patentansprüche

1. Anlage (100) zum Verfestigen eines Vlieses (23), das zumindest eine Lage unverfestigtes Vlies und/oder eine Schicht von losen Fasern umfasst, aufweisend zumindest einen Transporttisch (17), der ausgebildet ist, das unverfestigte Vlies und/oder die Schicht von losen Fasern zu transportieren, wobei der Transporttisch (17) ein umlaufendes Band (17a) mit einem ersten horizontalen Abschnitt (17b) aufweist, dem in Materialtransportrichtung ein zweiter schräg abfallender Abschnitt (17c) folgt, mit einer in Materialtransportrichtung ersten Trommel (18) mit mindestens zwei Wasserbalken (18.2, 18.1), und einer oberhalb der ersten Trommel (18) angeordneten zweiten Trommel (20) mit mindestens zwei Wasserbalken (20.1, 20.2), **dadurch gekennzeichnet, dass** die erste Trommel (18) zur Aufnahme des Vlieses oder der Schicht von losen Fasen mit dem schräg abfallenden Abschnitt (17c) des Transporttisches (17) derart zusammenwirkt, dass die Oberseite des unverfestigten Vlieses oder die Oberseite der Schicht von losen Fasern an der Oberfläche der Trommel (18) anliegt.

2. Anlage nach Anspruch 1, **dadurch gekennzeichnet, dass** die Drehachse der ersten Trommel (18) unterhalb der Ebene des horizontalen Abschnittes (17b) des Transporttisches (17) angeordnet ist.

3. Anlage nach Anspruch 1, **dadurch gekennzeichnet, dass** zwischen den Trommeln (18, 20) eine Führungswalze (19) derart angeordnet ist, dass das Vlies oder die Schicht von losen Fasern mit der Oberseite von der zweiten Trommel (20) aufgenommen wird.

4. Anlage nach Anspruch 1, **dadurch gekennzeichnet, dass** die Trommeln (18, 20) eine gemeinsame Mittelachse (Ma) aufweisen, wobei die Wasserbalken (18.1, 18.2, 20.1, 20.2, 20.3) in Materialflussrichtung hinter der Mittelachse (Ma) angeordnet sind.

5. Anlage nach Anspruch 1, **dadurch gekennzeichnet, dass** in Materialflussrichtung nach der zweiten Trommel (20) maximal zwei Umlenkwalzen (21, 22) angeordnet sind, die ausgebildet sind, das verfestigte Vlies (23) zu einer nachfolgenden Verarbeitungsstation zu führen.

6. Anlage nach Anspruch 1, **dadurch gekennzeichnet, dass** die erste Trommel (18) zwei weitere Wasserbalken (18.3, 18.4) aufweist, die unterhalb des Drehpunktes der ersten Trommel (18) angeordnet sind.

7. Anlage nach Anspruch 6, **dadurch gekennzeichnet, dass** ein Wasserbalken (18.4) innerhalb des Bandes (17a) angeordnet ist und durch den schräg abfallenden Abschnitt (17c) auf die Trommel (18) ausgerichtet ist.

8. Anlage nach Anspruch 1, **dadurch gekennzeichnet, dass** eine Führungswalze (25) entgegen der Materialflussrichtung zwischen den Trommeln (18, 20) angeordnet ist, wobei die Führungswalze (25) ausgebildet ist, das Vlies mit seiner Unterseite auf die zweite Trommel (20) zu führen.

9. Anlage nach Anspruch 1, **dadurch gekennzeichnet, dass** die Schicht an losen Fasern als Faserstoff (9) durch eine Vorrichtung in der Anlage (100) erzeugt wird, die als Schrägsiebformer (1), Rundsiebformer, Meltblownanlage, Sekundär-Stoffauflauf, oder als Airlaidanlage ausgebildet ist.

10. Anlage nach Anspruch 1, **dadurch gekennzeichnet, dass** das Vlies als Krempelvlies (15a) durch eine Krempel (15) in der Anlage (100) erzeugt wird, wobei die Krempel (15) in Materialflussrichtung hinter der Vorrichtung zur Erzeugung des Faserstoffs (9) angeordnet ist.

11. Anlage nach Anspruch 10, **dadurch gekennzeichnet, dass** die Krempel (15) in der Anlage (100) so angeordnet ist, dass das Krempelvlies (15a) auf dem Faserstoff (9) abgelegt wird und beides zusammen in der Anlage (100) eine Faser/Vlieskomposition (16) bilden.

12. Anlage nach Anspruch 1, **dadurch gekennzeichnet, dass** mindestens eine Trommel (18 oder 20) eine Reinigungsvorrichtung (18R oder 20R) aufweist, vorzugsweise beide Trommeln (18, 20) eine Reinigungsvorrichtung (18R, 20R) aufweisen.

13. Anlage nach Anspruch 9, dass mittels einer Abwickelstation (26) ein verfestigtes Vlies (26a) in die Anlage eingeführt wird, auf das der Faserstoff (9) abgelegt werden kann.

14. Verfahren zum Verfestigen eines Vlieses (23), das zumindest eine Lage unverfestigtes Vlies und/oder eine Schicht von losen Fasern umfasst, wobei das unverfestigte Vlies und/oder die Schicht von losen Fasern mittels eines Transporttisches (17) zu einer ersten Trommel (18) transportiert wird, und dabei die Oberseite des unverfestigten Vlieses oder die Oberseite der Schicht von losen Fasern von einem schräg abfallenden Abschnitt (17c) auf die Oberfläche der ersten Trommel (18) übergeben wird, wobei eine Verfestigung auf der ersten Trommel (18) durch mindestens zwei Wasserbalken (18.1, 18.2) von der Unterseite des Vlieses oder der Schicht von losen Fasern erfolgt, und eine weitere Verfestigung auf einer zweiten Trommel (20) mit Wasserbalken erfolgt, die oberhalb der ersten Trommel (18) angeordnet ist.

15. Verfahren nach Anspruch 14, **dadurch gekennzeichnet, dass** das Vlies oder die Schicht von losen Fasern mittels einer Führungswalze (19) so zur zweiten Trommel (20) geführt wird, dass deren Oberseite von der zweiten Trommel (20) aufgenommen wird.

16. Verfahren nach Anspruch 14, **dadurch gekennzeichnet, dass** das auf der ersten und zweiten Trommel (18, 29) verfestigte Vlies (23) zu einer nachfolgenden Verarbeitungsstation geführt wird und dabei maximal zweimal umgelenkt wird.

17. Verfahren nach Anspruch 14, **dadurch gekennzeichnet, dass** die Lage unverfestigtes Vlies und/oder die Schicht von losen Fasern auf der ersten Trommel (18) mit zwei weiteren Wasserbalken (18.3, 18.4) verfestigt wird.

18. Verfahren nach Anspruch 17, **dadurch gekennzeichnet, dass** mittels eines Wasserbalkens (18.4), der innerhalb des Bandes (17a) angeordnet ist und durch den schräg abfallenden Abschnitt (17c) auf die Trommel (18) ausgerichtet ist, die Lage unverfestigtes Vlies und/oder die Schicht von losen Fasern zwischen dem Band (17a) und der ersten Trommel (18) kompaktiert und vom Band (17a) auf die Trommel (18) übergeben wird.

19. Verfahren nach Anspruch 14, **dadurch gekennzeichnet, dass** das unverfestigte Vlies mittels einer Führungswalze (25), die entgegen der Materialflussrichtung zwischen den Trommeln (18, 20) angeordnet ist, mit seiner Unterseite auf die zweite Trommel (20) geführt wird.

20. Verfahren nach Anspruch 14, **dadurch gekennzeichnet, dass** die Schicht an losen Fasern als Faserstoff (9) ausgebildet ist, die durch einen in der Anlage (100) angeordneten Schrägsiebformer (1), Rundsiebformer, Meltblownanlage, Sekundär-Stoffauflauf, oder Airlaidanlage erzeugt wird.

21. Verfahren nach Anspruch 14, **dadurch gekennzeichnet, dass** das unverfestigte Vlies als Krempelvlies (15a) ausgebildet ist, dass durch eine Krempel (15) in der Anlage (100) erzeugt wird, wobei das Krempelvlies (15a) in Materialflussrichtung nach dem Faserstoff (9) in die Anlage (100) eingeführt wird.

22. Verfahren nach Anspruch 21, **dadurch gekennzeichnet, dass** das Krempelvlies (15a) auf dem Faserstoff (9) abgelegt wird und beides zusammen in der Anlage (100) eine Faser/Vlieskomposition (16) bilden.

23. Verfahren nach Anspruch 22, **dadurch gekennzeichnet, dass** ein verfestigtes Vlies (26a) in die Anlage eingeführt wird, auf dem der Faserstoff (9) abgelegt werden kann.

## Claims

1. System (100) for bonding a web (23) which includes at least one layer of non-bonded web and/or a layer of loose fibres, comprising at least one transport table (17) which is configured to convey the non-bonded web and/or the layer of loose fibres, wherein the transport table (17) comprises a circulating belt (17a) with a first horizontal section (17b), downstream of which a second downward-sloping section (17c) follows in the material conveying direction, with a first cylinder (18) in the material conveying direction with at least two water beams (18.2, 18.1), and a second cylinder (20) arranged above the first cylinder (18) with at least two water beams (20.1, 20.2), **characterised in that**, in order to receive the web or the layer of loose fibres, the first cylinder (18) interacts with the downward-sloping section (17c) of the transport table (17) in such a way that the upper face of the non-bonded web or the upper face of the layer of loose fibres rests on the surface of the cylinder (18).

2. System according to claim 1, **characterised in that** the rotary axis of the first cylinder (18) is arranged below the plane of the horizontal section (17b) of the transport table (17).

3. System according to claim 1, **characterised in that** a guide roller (19) is arranged between the cylinders (18, 20) in such a way that the web or the layer of loose fibres is received with the upper face by the second cylinder (20).

4. System according to claim 1, **characterised in that** the cylinders (18, 20) feature a common middle axis (Ma), wherein the water beams (18.1, 18.2, 20.1, 20.2, 20.3) are arranged downstream of the middle axis (Ma) in the direction of material flow.

5. System according to claim 1, **characterised in that** a maximum of two deflection rollers (21, 22) which are configured to direct the bonded web (23) to a downstream processing station, are arranged downstream of the second cylinder (20) in the direction of material flow.

6. System according to claim 1, **characterised in that** the first cylinder (18) comprises two further water beams (18.3, 18.4) which are arranged underneath the pivot point of the first cylinder (18).

7. System according to claim 6, **characterised in that** a water beam (18.4) is arranged within the belt (17a) and is aligned to the cylinder (18) by the downward-sloping section (17c).

8. System according to claim 1, **characterised in that** a guide roller (25) is arranged between the cylinders (18, 20) in the opposite direction to the direction of material flow, wherein the guide roller (25) is configured to guide the web with its lower face onto the second cylinder (20).

9. System according to claim 1, **characterised in that** the layer of loose fibres is generated as a fibrous material (9) by a device in the system (100) which is configured as an inclined wire former (1), round wire former, melt-blown system, secondary headbox or as an air-laid system.

10. System according to claim 1, **characterised in that** the web is generated as a carded web (15a) by a roller card (15) in the system (100), wherein the roller card (15) is arranged downstream of the device for generating the fibrous material (9) in the direction of material flow.

11. System according to claim 10, **characterised in that** the roller card (15) is arranged in the system (100) so that the carded web (15a) is laid on the fibrous material (9) and both form a fibre/web composition (16) together in the system (100).

12. System according to claim 1, **characterised in that** at least one cylinder (18 or 20) comprises a cleaning device (18R or 20R), preferably both cylinders (18, 20) comprise a cleaning device (18R, 20R).

13. System according to claim 9, **characterised in that** an unwinding station (26) is used to introduce a bonded web (26a) into the system, on which the fibrous material (9) can be laid.

14. Method for bonding a web (23) which includes at least one layer of non-bonded web and/or a layer of loose fibres, wherein the non-bonded web and/or the layer of loose fibres is conveyed to a first cylinder (18) by a transport table (17) and, in the process, the upper face of the non-bonded web or the upper face of the layer of loose fibres is transferred onto the surface of the first cylinder (18) by a downward-sloping section (17c), wherein a bonding process is performed on the first cylinder (18) by a minimum of two water beams (18.1, 18.2) from the underside of the web or the layer of loose fibres, and a further bonding process with water beams is performed on a second cylinder (20) which is arranged above the first cylinder (18).

15. Method according to claim 14, **characterised in that** the web or the layer of loose fibres is guided to the second cylinder (20) by a guide roller (19) so that its upper face is received by the second cylinder (20).

16. Method according to claim 14, **characterised in that** the web (23) bonded on the first and second cylinders (18, 29) is directed to a downstream processing station and is deflected a maximum of two times in the process.

17. Method according to claim 14, **characterised in that** the layer of non-bonded web and/or layer of loose fibres is bonded on the first cylinder (18) with two further water beams (18.3, 18.4).

18. Method according to claim 17, **characterised in that** a water beam (18.4) which is arranged within the belt (17a) and is aligned to the cylinder (18) by the downward-sloping section (17c), is used to compact the layer of non-bonded web and/or layer of loose fibres between the belt (17a) and the first cylinder (18) and that the layer is transferred from belt (17a) to the cylinder (18).

19. Method according to claim 14, **characterised in that** the non-bonded web is guided onto the second cylinder (20) with its lower face by a guide roller (25) which is arranged between the cylinders (18, 20) in the opposite direction to the direction of material flow.

20. Method according to claim 14, **characterised in that** the layer of loose fibres is generated as a fibrous material (9) by a device in the system (100) which is configured as an inclined wire former (1), round wire former, melt-blown system, secondary headbox or as an air-laid system.

21. Method according to claim 14, **characterised in that** the non-bonded web is configured as a carded web (15a) which is generated by a roller card (15) in the system (100), wherein the carded web (15a) is introduced into the system (100) downstream of the fibrous material (9) in the direction of material flow.

22. Method according to claim 21, **characterised in that** the carded web (15a) is laid on the fibrous material (9) and both form a fibre/web composition (16) together in the system (100).

23. Method according to claim 22, **characterised in that** a non-bonded web (26a) is introduced into the system on which the fibrous material (9) can be laid.

## Revendications

1. Installation (100) pour consolider un voile (23) qui comporte au moins une épaisseur de voile non consolidé et/ou une couche de fibres libres, comportant au moins une table de transport (17), conçue pour transporter le voile non consolidé et/ou la couche de fibres libres, dans laquelle la table de transport (17) comporte une bande périphérique (17a) avec une première section horizontale (17b), suivie dans le sens du transport de matière par une seconde section inclinée vers le bas (17c), avec un premier tambour (18) dans le sens du transport de matière avec au moins deux rampes d'eau (18.2, 18.1), et un deuxième tambour (20) disposé au-dessus du premier tambour (18) avec au moins deux rampes d'eau (20.1, 20.2), **caractérisée en ce que** le premier tambour (18) interagit de telle manière avec la section inclinée vers le bas (17c) de la table de transport (17) pour recevoir le voile ou la couche de fibres libres que la face supérieure du voile non consolidé ou la face supérieure de la couche de fibres libres adhère à la surface du tambour (18).

2. Installation selon la revendication 1, **caractérisée en ce que** l'axe de rotation du premier tambour (18) est disposé sous le niveau de la section horizontale (17b) de la table de transport (17).

3. Installation selon la revendication 1, **caractérisée en ce qu'**un rouleau de guidage (19) est disposé de telle manière entre les tambours (18, 20) que le voile ou la couche de fibres libres est reçu par le deuxième tambour (20) avec la face supérieure.

4. Installation selon la revendication 1, **caractérisée en ce que** les tambours (18, 20) comportent un axe central (Ma) commun, dans laquelle les rampes d'eau (18.1, 18.2, 20.1, 20.2, 20.3) sont disposées derrière l'axe central (Ma) dans le sens du flux de matière.

5. Installation selon la revendication 1, **caractérisée en ce qu'**un maximum de deux cylindres déflecteurs (21, 22) sont disposés dans le sens du flux de matière après le deuxième tambour (20) et sont conçus pour amener le voile consolidé (23) vers une station de traitement en aval.

6. Installation selon la revendication 1, **caractérisée en ce que** le premier tambour (18) comporte deux autres rampes d'eau (18.3, 18.4) qui sont disposées en dessous du point de rotation du premier tambour (18).

7. Installation selon la revendication 6, **caractérisée en ce qu'**une rampe d'eau (18.4) est disposée à l'intérieur de la bande (17a) et dirigée sur le tambour (18) à travers la section inclinée vers le bas (17c).

8. Installation selon la revendication 1, **caractérisée en ce qu'**un rouleau de guidage (25) est disposé entre les tambours (18, 20) dans le sens contraire du flux de matière, dans laquelle le rouleau de guidage (25) est conçu pour amener le voile avec sa face inférieure sur le deuxième tambour (20).

9. Installation selon la revendication 1, **caractérisée en ce que** la couche de fibres libres est créée comme matière fibreuse (9) par un dispositif dans l'installation (100), dispositif qui est conçu comme formateur à tamis incliné (1), formateur à tamis rond, installation Meltblown, caisse de tête secondaire ou installation Airlaid.

10. Installation selon la revendication 1, **caractérisée en ce que** le voile est créé comme voile de carde (15a) par une carde à rouleaux (15) dans l'installation (100), dans laquelle la carde à rouleaux (15) est disposée derrière le dispositif de création de la matière fibreuse (9) dans le sens du flux de matière.

11. Installation selon la revendication 10, **caractérisée en ce que** la carde à rouleaux (15) est disposée de telle manière dans l'installation (100) que le voile de carde (15a) est déposé sur la matière fibreuse (9) et que les deux ensemble forment une composition de fibres/voile (16) dans l'installation (100).

12. Installation selon la revendication 1, **caractérisée en ce qu'**au moins un tambour (18 ou 20) comporte un dispositif de nettoyage (18R ou 20R), de préférence que les deux tambours (18, 20) comportent un dispositif de nettoyage (18R, 20R).

13. Installation selon la revendication 9, **caractérisée en ce qu'**un voile consolidé (26a) est introduit dans l'installation au moyen d'une station de déroulement (26), voile sur lequel la matière fibreuse (9) peut être déposée.

14. Procédé de consolidation d'un voile (23) qui comprend au moins une épaisseur de voile non consolidé et/ou une couche de fibres libres, dans lequel le voile non consolidé et/ou la couche de fibres libres est transporté·e vers un premier tambour (18) à l'aide d'une table de transport (17), et, ce faisant, la face supérieure du voile non consolidé ou la face supérieure de la couche de fibres libres est transmis d'une section inclinée vers le bas (17c) sur la surface du premier tambour (18), dans lequel une consolidation est effectuée sur le premier tambour (18) par au moins deux rampes d'eau (18.1, 18.2) depuis la face inférieure du voile ou de la couche de fibres libres, et une autre consolidation est effectuée à l'aide de rampes d'eau sur un deuxième tambour (20) qui est disposé au-dessus du premier tambour (18).

15. Procédé selon la revendication 14, **caractérisé en ce que** le voile ou la couche de fibres libres est amené·e au moyen d'un rouleau de guidage (19) vers le deuxième tambour (20) de telle manière que leur face supérieure soit reprise par le deuxième tambour (20).

16. Procédé selon la revendication 14, **caractérisé en ce que** le voile consolidé (23) sur le premier et le deuxième tambour (18, 29) est amené vers une station de traitement en aval et qu'il est dévié au maximum deux fois.

17. Procédé selon la revendication 14, **caractérisé en ce que** l'épaisseur de voile non consolidé et/ou la couche de fibres libres est consolidée sur le premier tambour (18) avec deux autres rampes d'eau (18.3, 18.4).

18. Procédé selon la revendication 17, **caractérisé en ce que**, au moyen d'une rampe d'eau (18.4) disposée à l'intérieur de la bande (17a) et dirigée sur le tambour (18) à travers la section inclinée vers le bas (17c), l'épaisseur de voile non consolidé et/ou la couche de fibres libres est compactée entre la bande (17a) et le premier tambour (18) et est transmise de la bande (17a) au tambour (18).

19. Procédé selon la revendication 14, **caractérisé en ce que** le voile non consolidé est amené avec sa face inférieure sur le deuxième tambour (20) au moyen d'un rouleau de guidage (25) disposé entre les tambours (18, 20) dans le sens contraire du flux de matière.

20. Procédé selon la revendication 14, **caractérisé en ce que** la couche de fibres libres est conçue comme matière fibreuse (9) qui est créée par un formateur à tamis incliné (1), un formateur à tamis rond, une installation Meltblown, une caisse de tête secondaire ou une installation Airlaid disposé·e dans l'installation (100).

21. Procédé selon la revendication 14, **caractérisé en ce que** le voile non consolidé est conçu comme voile de carde (15a) créé par une carde à rouleaux (15) dans l'installation (100), dans lequel le voile de carde (15a) est introduit dans l'installation (100) après la matière fibreuse (9) dans le sens du flux de matière.

22. Procédé selon la revendication 21, **caractérisé en ce que** le voile de carde (15a) est déposé sur la matière fibreuse (9) et que les deux ensemble forment une composition de fibres/voile (16) dans l'installation (100).

23. Procédé selon la revendication 22, **caractérisé en ce qu'**un voile consolidé (26a) est introduit dans l'installation, sur lequel la matière fibreuse (9) peut être déposée.
